# EUROPEAN PATENT SPECIFICATION

(11) **EP 3 700 796 B1**
(45) Date of publication and mention of the grant of the patent: **14.04.2021**
(21) Application number: 18908264.7
(22) Date of filing: 26.12.2018
(51) Int. Cl.: B60W 60/00, B60W 30/14, B60W 30/095, B60W 30/18, B60W 40/04

(54) **METHODS FOR OBSTACLE FILTERING FOR NON-NUDGE PLANNING SYSTEM IN AUTONOMOUS DRIVING VEHICLE**
VERFAHREN ZUR HINDERNISFILTERUNG FÜR EIN ANSTOSSFREIES PLANUNGSSYSTEM BEI EINEM AUTONOM FAHRENDEN FAHRFAHRZEUG
PROCÉDÉS DE FILTRAGE D'OBSTACLES POUR SYSTÈME DE PLANIFICATION D'ÉVITEMENT DE COLLISION DANS UN VÉHICULE À CONDUITE AUTONOME

(43) Date of publication of application: 02.09.2020
(73) Proprietor: Baidu.com Times Technology (Beijing) Co., Ltd., Beijing 100080 (CN); Baidu USA LLC, Sunnyvale, California 94089 (US)
(72) Inventor: ZHU, Fan, California 94089 (US); MA, Lin, Beijing (CN); XU, Xin, Beijing 100000 (CN)
(74) Representative: Lucke, Andreas
(86) International application number: PCT/CN2018/123888
(87) International publication number: WO 2020/132938

(56) References cited:
- EP-A1- 3 291 202
- CN-A- 106 405 539
- CN-A- 107 264 531
- CN-A- 107 792 073
- CN-A- 108 995 646
- US-A1- 2012 053 755
- US-A1- 2014 379 247
- US-A1- 2017 158 175
- US-A1- 2018 154 825
- US-B1- 8 874 267

## Description

### TECHNICAL FIELD

The present invention relates to a method for operating an autonomous driving vehicle comprising filtering obstacles in a non-nudge planning system.

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors and high-definition maps, allowing the vehicle to travel with minimal human interaction or in some cases without any passengers.

An autonomous driving vehicle (ADV) relies on real-time traffic and local environment data detected by sensors to plan an optimal route in each planning phase. Obstacles (e.g., objects and nearby vehicles) in the perceived area of an ADV can impact the planning of the ADV. The more obstacles in the perceived area, the more time it takes to plan the ADV's next move. Therefore, it would be desirable to filter out some obstacles to improve an ADV's planning efficiency without impacting the ADV's safety.

European Patent Application Publication EP 3291202 A1 presents a method of trajectory planning for manoeuvres such as lane changes, intersection crossing, and roundabout entry, including steps of using receding horizon control applying a finite prediction horizon for determining possible lateral motion trajectories of a requested manoeuvre; longitudinal safety critical zones which correspond to each of the determined possible lateral motion trajectories; a longitudinal motion trajectory of the requested manoeuvre; lateral safety critical zones which correspond to the determined longitudinal motion trajectory of the requested manoeuvre, and a lateral motion trajectory of the requested manoeuvre.

### SUMMARY

In an aspect, the invention provides a computer-implemented method for operating an autonomous driving vehicle, the method including: perceiving a driving environment surrounding an autonomous driving vehicle (ADV), including perceiving an initial set of obstacles within a first lane in which the ADV is driving; identifying a first set of one or more obstacles as a subset from the initial set of obstacles based on a first set of predetermined criteria; expanding a dimension of each obstacle in the first set of obstacles to a width of the first lane to prevent the ADV from nudging any obstacle in the first set of obstacles; and planning a trajectory for the ADV in view of the expanded obstacles in the first set to control the ADV to navigate through the first lane, without considering remaining obstacles in the initial set. The method further comprises: in response to the ADV switching from the first lane to a second lane, identifying a second set of obstacles therein based on a second set of predetermined criteria; and expanding each of the obstacles in the second set of obstacles to a width of the second lane.

In another aspect, the invention provides a non-transitory machine-readable medium having instructions stored therein, which when executed by a processor, cause the processor to perform operations, the operations including: perceiving a driving environment surrounding an autonomous driving vehicle (ADV), including perceiving an initial set of obstacles within a first lane in which the ADV is driving; identifying a first set of one or more obstacles as a subset from the initial set of obstacles based on a first set of predetermined criteria; expanding a dimension of each obstacle in the first set of obstacles to a width of the first lane to prevent the ADV from nudging any obstacle in the first set of obstacles; and planning a trajectory for the ADV in view of the expanded obstacles in the first set to control the ADV to navigate through the first lane, without considering remaining obstacles in the initial set. The operations further comprise: in response to the ADV switching from the first lane to a second lane, identifying a second set of obstacles therein based on a second set of predetermined criteria; and expanding each of the obstacles in the second set of obstacles to a width of the second lane.

In another aspect, the invention provides a data processing system, the system includes a processor; and a memory coupled to the processor to store instructions, which when executed by the processor, causing the processor to perform operations, the operations includes: perceiving a driving environment surrounding an autonomous driving vehicle (ADV), including perceiving an initial set of obstacles within a first lane in which the ADV is driving, identifying a first set of one or more obstacles as a subset from the initial set of obstacles based on a first set of predetermined criteria, expanding a dimension of each obstacle in the first set of obstacles to a width of the first lane to prevent the ADV from nudging any obstacle in the first set of obstacles, and planning a trajectory for the ADV in view of the expanded obstacles in the first set to control the ADV to navigate through the first lane, without considering remaining obstacles in the initial set. The operations further comprise: in response to the ADV switching from the first lane to a second lane, identifying a second set of obstacles therein based on a second set of predetermined criteria; and expanding each of the obstacles in the second set of obstacles to a width of the second lane.

### BRIEF DESCRIPTION OF THE DRAWINGS

Embodiments of the invention are illustrated by way of example and not limitation in the figures of the accompanying drawings in which like references indicate similar elements.
Figure 1 is a block diagram illustrating a networked system according to one embodiment.
Figure 2 is a block diagram illustrating an example of an autonomous vehicle according to one embodiment.
Figures 3A-3B are block diagrams illustrating an example of a perception and planning system used with an autonomous vehicle according to one embodiment.
Figure 4 illustrates an exemplary system for use by an ADV in filtering out obstacles in accordance with an embodiment.
Figures 5A-5B are exemplary diagrams showing how obstacles are filtered out in a non-nudge scene in accordance with an embodiment.
Figure 6 is a flow diagram illustrating a process of filtering out obstacles in accordance with an example not belonging to the invention as defined in the claims but useful for the understanding thereof.
**[_{0014]}** Figure 7 a block diagram illustrating an example of a data processing system which may be used with one embodiment of the invention.

### DETAILED DESCRIPTION

Various embodiments and aspects of the invention will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present invention.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

In an embodiment, described herein is a system and method for filtering obstacles to reduce the number of obstacles for an autonomous driving vehicle (ADV) to process in a given planning phase. The ADV can identify a first set of obstacles based on a set of criteria in a first lane where the ADV is travelling, filter out the remaining obstacles in the first lane, and expand each identified obstacle to a width of the first lane from the view of the ADV so that the ADV cannot nudge any of the first set of identified obstacles.

When switching from the first lane to a second lane, the ADV can identify a second set of obstacles in the second lane using the same set of criteria, and expand each obstacle in the second set of obstacles to a width of the second lane while keep tracking the first set of identified obstacles. By expanding each of the second set of identified obstacles in the second lane, the ADV is prevented from nudging any of the second set of identified obstacles. In an embodiment, when the lane switching is completed, the ADV can stop tracking the first set of identified obstacles.

As used herein, nudging an obstacle means taking actions to avoid colliding with or avoiding touching an obstacle. An example of a nudging action is to pass a vehicle on a high way. A planning phase can include multiple driving cycles, and can represent a time period during which one or more control commands will be issued by the ADV based on planning and control data. A prediction window is a time period used by a prediction module of the ADV to predict how obstacles in a surrounding environment of the ADV behave based on perception data in view of a set of map/rout information and traffic rules.

In an embodiment, the first set of identified obstacles can include the closest obstacle in the first lane at the beginning of a prediction window, the closest obstacle in the first lane at the end of the prediction window, and one or more obstacles that are crossing the first lane during the prediction window. Similarly, the second set of identified obstacles can include the closest obstacle in the second lane at the beginning of the prediction window, the closest obstacle in the second lane at the end of the prediction window, and one or more obstacles that are crossing the second lane during the prediction window

In an embodiment, each of the first set of obstacles and the second set of obstacles is one of a vehicle, a person, a bicycle, a motorcycle, or another moving object, and can appears as a polygon to the ADV. The ADV determines whether to change lane or not based on results of prediction by the ADV based at least on map information.

By identifying a smaller set of obstacles and planning a next route based on the smaller set of obstacles, the ADV can substantially reduce the number of obstacles to process, thus improving the planning efficiency of the ADV in a driving environment where the ADV is not to nudge other surrounding objects. The features described above are particularly useful, for example, in a high way in rush hours, where a large number of obstacles may be perceived by the ADV.

### Autonomous Driving Vehicle

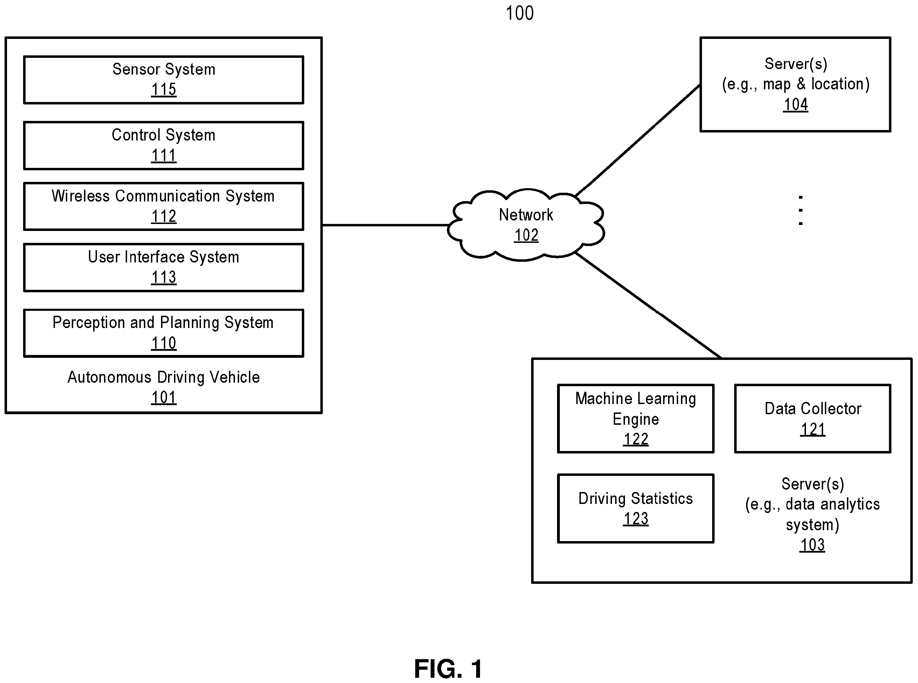

Figure 1 is a block diagram illustrating an autonomous vehicle network configuration according to one embodiment of the invention. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode.

In one embodiment, autonomous vehicle 101 includes, but is not limited to, perception and planning system 110, vehicle control system 111, wireless communication system 112, user interface system 113, infotainment system 114, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

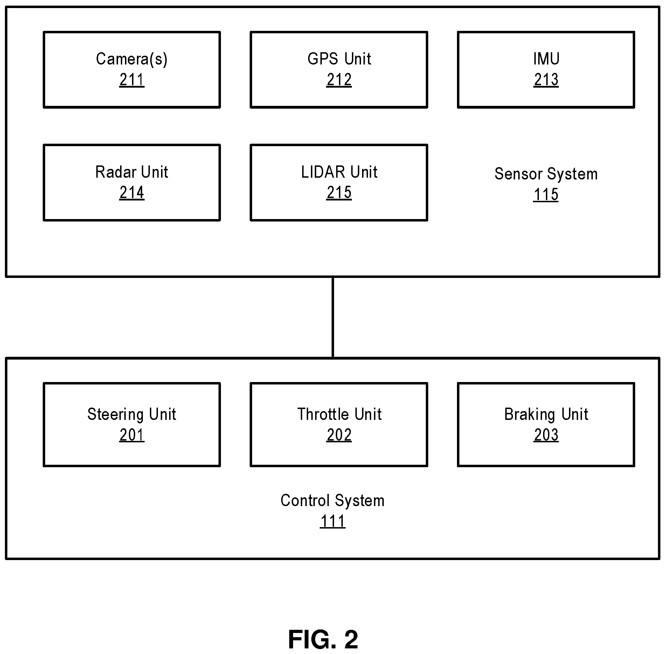

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the autonomous vehicle. IMU unit 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn control the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110.

While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either autonomous vehicles or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes including, for example, algorithms for nudging. Algorithms 124 can then be uploaded on ADVs to be utilized during autonomous driving in real-time.

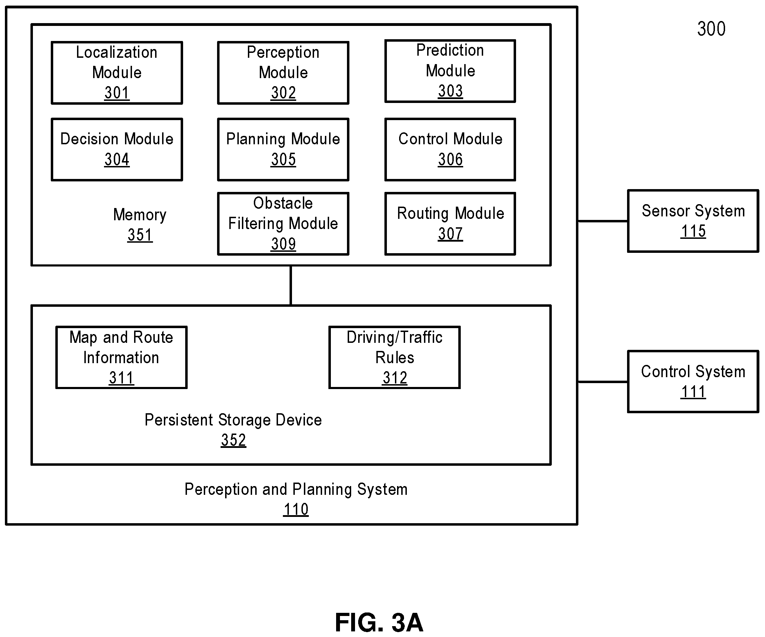

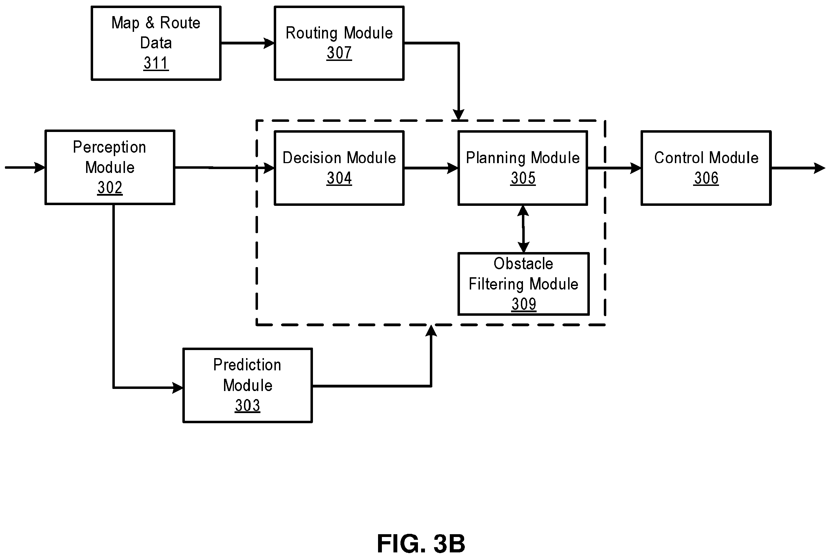

Figures 3A and 3B are block diagrams illustrating an example of a perception and planning system used with an autonomous vehicle according to one embodiment. System 300 may be implemented as a part of autonomous vehicle 101 of Figure 1 including, but is not limited to, perception and planning system 110, control system 111, and sensor system 115. Referring to Figures 3A-3B, perception and planning system 110 includes, but is not limited to, localization module 301, perception module 302, prediction module 303, decision module 304, planning module 305, control module 306, routing module 307, and obstacle filtering module 309.

Some or all of modules 301-309 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-309 may be integrated together as an integrated module.

Localization module 301 determines a current location of autonomous vehicle 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route for the autonomous vehicle, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 mile per hour (mph), then change to a right lane at the speed of 25 mph.

Based on the planning and control data, control module 306 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the autonomous vehicle. For example, the navigation system may determine a series of speeds and directional headings to affect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

The obstacle filtering module 309 can be used to identify a set of obstacles in a perceived area of the ADV, and filter out the remaining obstacles in the perceived area. Each obstacle in the identified set of obstacles can be expanded to a width of a lane that the ADV is travelling so that the ADV cannot nudge any of the identified obstacles. The obstacle filtering module 309 can be automatically invoked when the ADV perceives obstacles exceeding a predetermined number, and can automatically pass the planning functionality of the ADV to the planning module 305 once the perceived obstacles falls below the predetermined number.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this invention. Alternatively, such components can be implemented as executable code programmed or embedded into dedicated harware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

### Obstacles Filtering

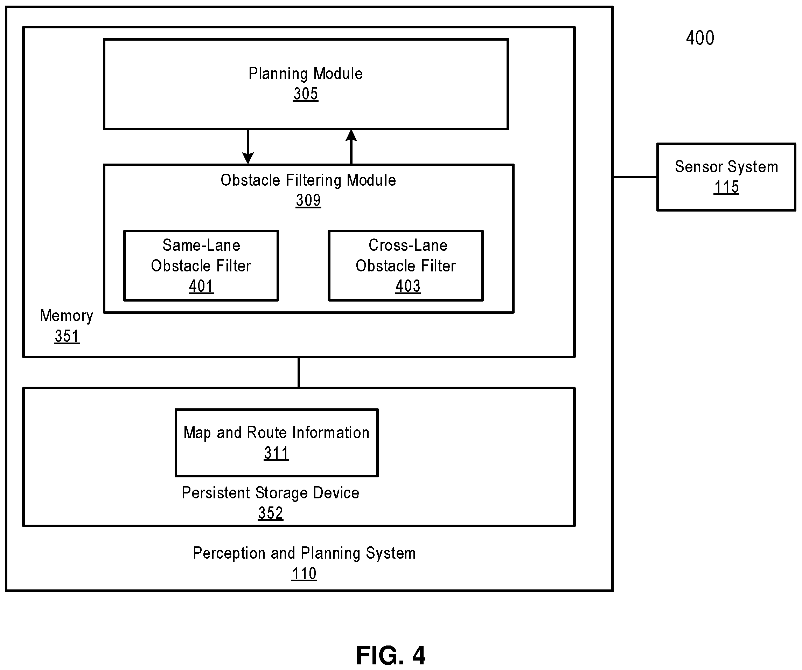

Figure 4 illustrates an exemplary system for use by an ADV in filtering out obstacles in accordance with an embodiment. In an embodiment, the obstacle filtering module 309 can be provided as an alternative module to the planning module 305 for planning trajectories of the ADV. When planning a trajectory for the ADV, the obstacle filtering module 309 can first determine whether a lane change is needed based on map information and perceived traffic conditions, and/or prediction results generated from a prediction module of the ADV. If a lane change is not needed, the obstacle filtering module 309 can invoke a same-lane obstacle filter 401 to identify one or more obstacles in a current lane where the ADV is travelling, and filter out any other obstacles.

In an embodiment, the filtered-out obstacles are not to be processed by the ADV during a given planning phase of the ADV. Each of the one or more identified obstacles is to be expanded by the ADV to appear to have completely blocked the current lane, which prevents the ADV from nudging (e.g., passing) any of the identified obstacle.

Different processes can be used to identify the one or more obstacles for the ADV to track. For one example, the set of obstacles that the ADV can be identified by a process configured to select an obstacle that is the closest to the ADV at the beginning of a prediction time window (e.g., 8 seconds), an obstacle that is the closet to the ADV at the end of the prediction window, and one or more obstacles that are crossing the current lane during the prediction window. That is, any obstacles that are predicted to occur or occupy at least a portion of the current lane during the prediction window will be considered for nudging purposes. In other words, if any part of an obstacle (e.g., physical dimension) is within the current lane during the prediction window, that obstacle will be considered. Any other obstacles in the current lane, but outside of the prediction window (e.g., obstacle 513), would be ignored or filtered out, leaving only the set of identified obstacles for the ADV to process in planning the next optimal path. As a result, time and resources consumption can be reduced during the planning process.

Alternatively, the ADV can be configured to identify a fixed number of obstacles (e.g., 3 obstacles) during the prediction window based on their distances to the ADV as well as any obstacle that is crossing the lane in front of the ADV regardless of its distance to the ADV.

If the ADV determines that a lane change is necessary, a cross-lane obstacle filter 403 can be invoked. In this scenario, the ADV can identify one or more obstacles in a new lane that the ADV switches to. The one or more obstacles in the new lane can be identified similarly as the set of obstacles in the current lane are identified by the ADV for tracking.

In an embodiment, each identified obstacle in the new lane or current lane would be expanded to a width of their respective lane so that the ADV cannot nudge any of the identified obstacles during the lane change process. Once the lane change is completed, the ADV can stop tracking the set of obstacles in the previous lane (i.e., current lane before the lane change is completed).

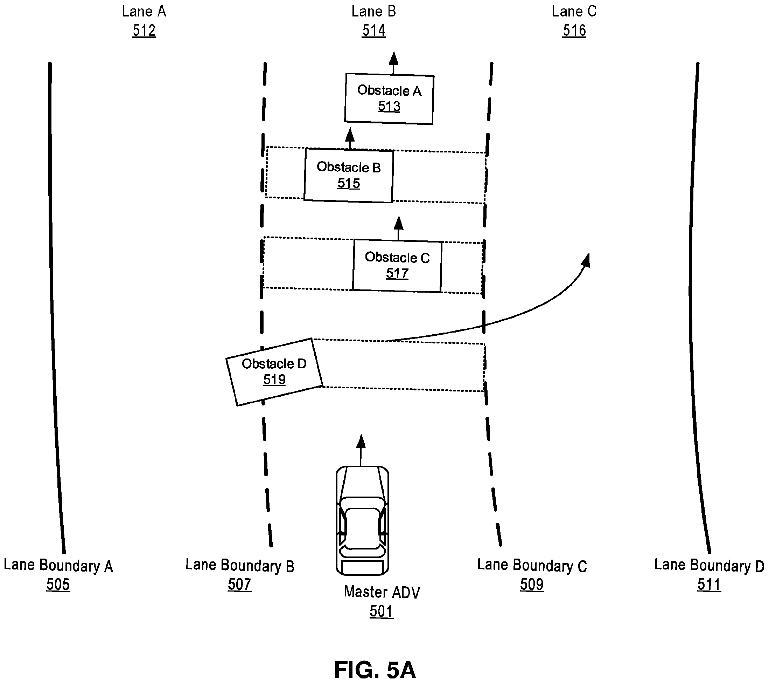

Figures 5A-5B are exemplary diagrams showing how obstacles are filtered out in a non-nudge scene in accordance with an embodiment. Figure 5A shows a master ADV 501 that is travelling in a lane B 514 on three-lane road, which also includes lane A 512 and lane C 516. The three-lane road includes a number of lane boundaries 505-511.

The master ADV 501 can identify a set of obstacles for expanding so that the master ADV 501 will not nudge any of the obstacles. In this example, obstacle B 515, obstacle C 517 and obstacle D 519 have been identified as obstacles that are to be expanded. Obstacle C 517 can be the closest obstacle to the master ADV 501 at the beginning of a prediction window. Obstacle B 515 can be the closest obstacle to the master ADV 501 at the end of the prediction window. Obstacle D 519 can be the obstacle that is crossing lane B 514 during the prediction window from lane A 512 to lane C 516.

As shown in the figure, obstacle B 515, obstacle C 517, and obstacle D 519 are expanded to the width of lane B 514 so that each expanded obstacle blocks the whole lane, and does not allow the master ADV 501 to nudge any of the expanded obstacles.

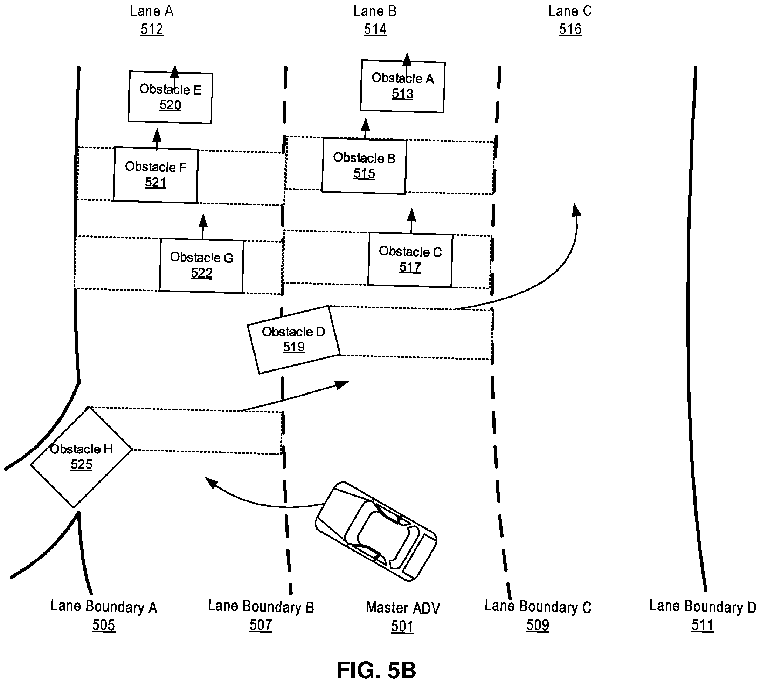

Figure 5B illustrates a lane change scenario for the master ADV 501. In this scenario, the master ADV 501 is to switch to lane A 512 from lane B 514. During a current prediction window, the master ADV can keep tracking a set of identified obstacles that have been expanded to the width of lane B 514. The master ADV can further identify another set of obstacles in lane A 512 using the same criteria used to identify the set of obstacles in lane B 514.

For example, obstacle G 522, obstacle 521, and obstacle H 525 in lane A 512 can be identified and expanded to a width of lane A 512. Obstacle G 522 can be the closest obstacle to the master ADV 501 at the beginning of the prediction window. Obstacle F 521 can be the closest obstacle to the master ADV 501 at the end of the prediction window. Obstacle H 525 can be an obstacle that is getting on the road to cross lane A 512 to lane B 514.

In an embodiment, the master ADV 501 can keep track of the two sets of identified obstacles in lane A 512 and lane B 514 during the process of changing lane. Once the lane changing is completed, the master ADV 501 can stop tracking the set of identified obstacles in lane B 514.

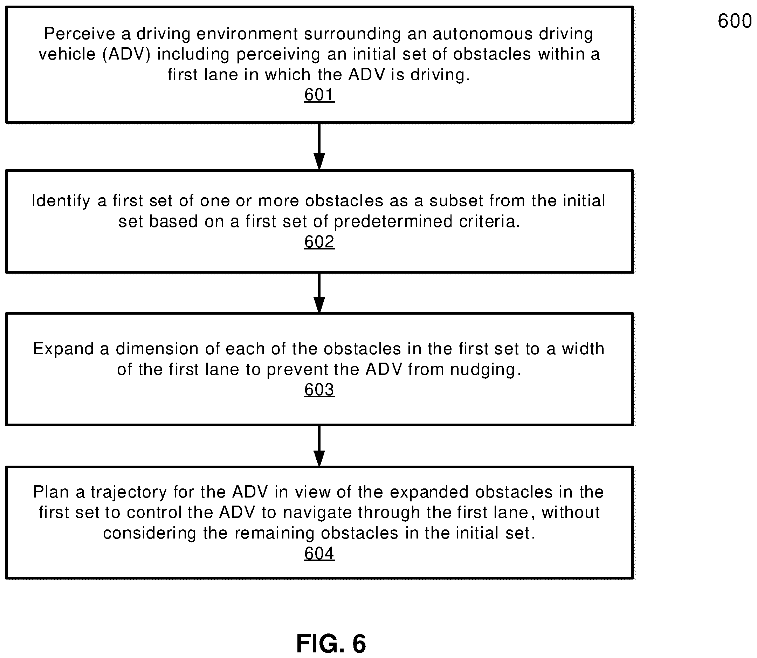

Figure 6 is a flow diagram illustrating an example process of filtering out obstacles that is part of the method according to the invention. Process 600 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, process 600 may be performed by one or more of perception module 302, planning module 305, routing module 307, and obstacle filtering module 309 illustrated in Figure 3A and Figure 3B.

Referring to Figure 6, in operation 601, the processing logic perceives a driving environment surrounding an ADV, including perceiving an initial set of one or more obstacles within a first lane in which the ADV is moving. In operation 602, processing logic identifies a first set of one or more obstacles as a subset of the initial set to track during a planning phase. The set of obstacles are identified in the first lane, and can include a closest obstacle to the ADV at the beginning of a prediction window of the ADV, a closest obstacle to the ADV at the end of the prediction time window, and one or more obstacles that are crossing the first lane during the prediction window. Such a process literally filters out any obstacles that are immediately relevant to the next planning cycle of the ADV. That is, during the planning phase, the ADV filters out the remaining obstacles other than the identified obstacles in the first lane. By filtering out the remaining obstacles, the ADV does not consider how those objects behave in planning its next route, and only concentrate on the set of identified obstacles.

In operation 603, the ADV expands a dimension of each identified obstacle to a width of the first lane so that each expanded obstacle blocks the ADV to prevent the ADV from nudging any of the expanded obstacles. In operation 604, the processing logic plans a trajectory in view of the expanded obstacles to control the ADV to navigate through the lane, without considering or using the remaining obstacles in the initial set. By filtering out a large number of obstacles, the ADV only needs to process a smaller set of obstacles that are critical to the planning of the ADV, thereby improving the planning efficiency of the ADV. In a crowded road segment, such as a high way in rush hours, the method described herein can substantially boost the planning performance of the ADV.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this disclosure. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

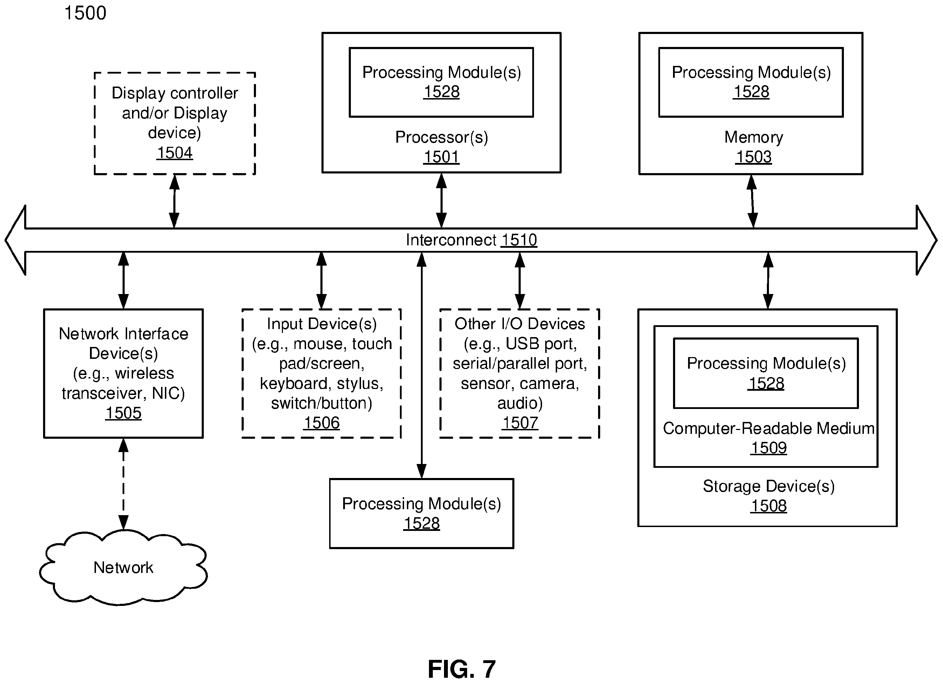

Figure 7 a block diagram illustrating an example of a data processing system which may be used with one embodiment of the invention. For example, system 1500 may represent any of data processing systems described above performing any of the processes or methods described above, such as, for example, the obstacle filtering module 309 of Figure 1. System 1500 can include many different components. These componens can be implemented as integrated circuits (ICs), portions thereof, discrete electronic devices, or other modules adapted to a circuit board such as a motherboard or add-in card of the computer system, or as components otherwise incorporated within a chassis of the computer system.

Note also that system 1500 is intended to show a high level view of many components of the computer system. However, it is to be understood that additional components may be present in certain implementations and furthermore, different arrangement of the components shown may occur in other implementations. System 1500 may represent a desktop, a laptop, a tablet, a server, a mobile phone, a media player, a personal digital assistant (PDA), a Smartwatch, a personal communicator, a gaming device, a network router or hub, a wireless access point (AP) or repeater, a set-top box, or a combination thereof. Further, while only a single machine or system is illustrated, the term "machine" or "system" shall also be taken to include any collection of machines or systems that individually or jointly execute a set (or multiple sets) of instructions to perform any one or more of the methodologies discussed herein.

In one embodiment, system 1500 includes processor 1501, memory 1503, and devices 1505-1508 connected via a bus or an interconnect 1510. Processor 1501 may represent a single processor or multiple processors with a single processor core or multiple processor cores included therein. Processor 1501 may represent one or more general-purpose processors such as a microprocessor, a central processing unit (CPU), or the like. More particularly, processor 1501 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1501 may also be one or more special-purpose processors such as an application specific integrated circuit (ASIC), a cellular or baseband processor, a field programmable gate array (FPGA), a digital signal processor (DSP), a network processor, a graphics processor, a communications processor, a cryptographic processor, a co-processor, an embedded processor, or any other type of logic capable of processing instructions.

Processor 1501, which may be a low power multi-core processor socket such as an ultra-low voltage processor, may act as a main processing unit and central hub for communication with the various components of the system. Such processor can be implemented as a system on chip (SoC). Processor 1501 is configured to execute instructions for performing the operations and steps discussed herein. System 1500 may further include a graphics interface that communicates with optional graphics subsystem 1504, which may include a display controller, a graphics processor, and/or a display device.

Processor 1501 may communicate with memory 1503, which in one embodiment can be implemented via multiple memory devices to provide for a given amount of system memory. Memory 1503 may include one or more volatile storage (or memory) devices such as random access memory (RAM), dynamic RAM (DRAM), synchronous DRAM (SDRAM), static RAM (SRAM), or other types of storage devices. Memory 1503 may store information including sequences of instructions that are executed by processor 1501, or any other device. For example, executable code and/or data of a variety of operating systems, device drivers, firmware (e.g., input output basic system or BIOS), and/or applications can be loaded in memory 1503 and executed by processor 1501. An operating system can be any kind of operating systems, such as, for example, Robot Operating System (ROS), Windows® operating system from Microsoft®, Mac OS®/iOS® from Apple, Android® from Google®, LINUX, UNIX, or other real-time or embedded operating systems.

System 1500 may further include IO devices such as devices 1505-1508, including network interface device(s) 1505, optional input device(s) 1506, and other optional IO device(s) 1507. Network interface device 1505 may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

Input device(s) 1506 may include a mouse, a touch pad, a touch sensitive screen (which may be integrated with display device 1504), a pointer device such as a stylus, and/or a keyboard (e.g., physical keyboard or a virtual keyboard displayed as part of a touch sensitive screen). For example, input device 1506 may include a touch screen controller coupled to a touch screen. The touch screen and touch screen controller can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen.

IO devices 1507 may include an audio device. An audio device may include a speaker and/or a microphone to facilitate voice-enabled functions, such as voice recognition, voice replication, digital recording, and/or telephony functions. Other IO devices 1507 may further include universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Devices 1507 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 1510 via a sensor hub (not shown), while other devices such as a keyboard or thermal sensor may be controlled by an embedded controller (not shown), dependent upon the specific configuration or design of system 1500.

To provide for persistent storage of information such as data, applications, one or more operating systems and so forth, a mass storage (not shown) may also couple to processor 1501. In various embodiments, to enable a thinner and lighter system design as well as to improve system responsiveness, this mass storage may be implemented via a solid state device (SSD). However in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. Also a flash device may be coupled to processor 1501, e.g., via a serial peripheral interface (SPI). This flash device may provide for non-volatile storage of system software, including BIOS as well as other firmware of the system.

Storage device 1508 may include computer-accessible storage medium 1509 (also known as a machine-readable storage medium or a computer-readable medium) on which is stored one or more sets of instructions or software (e.g., module, unit, and/or logic 1528) embodying any one or more of the methodologies or functions described herein. Processing module/unit/logic 1528 may represent any of the components described above, such as, for example, planning module 305, control module 306, and obstacle filtering module 309. Processing module/unit/logic 1528 may also reside, completely or at least partially, within memory 1503 and/or within processor 1501 during execution thereof by data processing system 1500, memory 1503 and processor 1501 also constituting machine-accessible storage media. Processing module/unit/logic 1528 may further be transmitted or received over a network via network interface device 1505.

Computer-readable storage medium 1509 may also be used to store the some software functionalities described above persistently. While computer-readable storage medium 1509 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "computer-readable storage medium" shall also be taken to include any medium that is capable of storing or encoding a set of instructions for execution by the machine and that cause the machine to perform any one or more of the methodologies of the present invention. The term "computer-readable storage medium" shall accordingly be taken to include, but not be limited to, solid-state memories, and optical and magnetic media, or any other non-transitory machine-readable medium.

Processing module/unit/logic 1528, components and other features described herein can be implemented as discrete hardware components or integrated in the functionality of hardware components such as ASICS, FPGAs, DSPs or similar devices. In addition, processing module/unit/logic 1528 can be implemented as firmware or functional circuitry within hardware devices. Further, processing module/unit/logic 1528 can be implemented in any combination hardware devices and software components.

Note that while system 1500 is illustrated with various components of a data processing system, it is not intended to represent any particular architecture or manner of interconnecting the components; as such details are not germane to embodiments of the present invention.

Embodiments of the disclosure also relate to an apparatus for performing the operations herein, such as a computer program stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that includes hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present invention are not described with reference to any particular programming language. It will be appreciated that a variety of programming languages may be used to implement the teachings of the invention as described herein.

In the foregoing specification, embodiments of the disclosure have been described with reference to specific exemplary embodiments thereof. It will be evident that various modifications may be made thereto without departing from the scope of the invention as set forth in the following claims. The description and drawings are, accordingly, to be regarded in an illustrative sense rather than a restrictive sense.

## Claims

1. A computer-implemented method for operating an autonomous driving vehicle, the method comprising:
perceiving (601) a driving environment surrounding an autonomous driving vehicle (ADV) (501), including perceiving an initial set of obstacles (513,515,517,519) within a first lane (514) in which the ADV (501) is driving;
identifying (602) a first set of one or more obstacles as a subset from the initial set of obstacles (513,515,517,519) based on a first set of predetermined criteria;
expanding (603) a dimension of each obstacle in the first set of obstacles to a width of the first lane (514) to prevent the ADV (501) from nudging any obstacle in the first set of obstacles; and
planning (604) a trajectory for the ADV (501) in view of the expanded obstacles in the first set to control the ADV (501) to navigate through the first lane (514), without considering remaining obstacles in the initial set;
**characterised in that** the method further comprises:
in response to the ADV (501) switching from the first lane (514) to a second lane (512), identifying a second set of obstacles therein based on a second set of predetermined criteria; and
expanding each of the obstacles in the second set of obstacles to a width of the second lane.

2. The method of claim 1, wherein the first set of obstacles includes an obstacle closest to the ADV (501) at the beginning of a prediction window, an obstacle closest to the ADV (501) at the end of the prediction window, and one or more obstacles crossing the first lane (514) during the prediction window.

3. The method of claim 1, wherein the ADV (501) stops tracking the first set of obstacles in the first lane (514) after the ADV (501) switches to the second lane (512).

4. The method of claim 1, wherein each of the first set of obstacles and the second set of obstacles is one of a vehicle, a person, a bicycle, a motorcycle, or another moving object.

5. The method of claim 4, wherein each of the first set of obstacles and the second set of obstacles appears as a polygon to the ADV.

6. The method of claim 1, wherein the ADV (501) determines whether to change lane or not based on results of prediction by the ADV (501) based at least on map information.

7. A non-transitory machine-readable medium having instructions stored therein, which when executed by a processor (1501), causing the processor (1501) to perform the method of any one of claims 1-6.

8. A data processing system, comprising:
a processor (1501); and
a memory coupled to the processor (1501) to store instructions, which when executed by a processor (1501), causing the processor (1501) to perform operations, the operations comprising:
perceiving (601) a driving environment surrounding an autonomous driving vehicle (ADV) (501), including perceiving an initial set of obstacles (513,515,517,519) within a first lane 514) in which the ADV (501) is driving,
identifying (602) a first set of one or more obstacles as a subset from the initial set of obstacles (513,515,517,519) based on a first set of predetermined criteria,
expanding (603) a dimension of each obstacle in the first set of obstacles to a width of the first lane (514) to prevent the ADV (501) from nudging any obstacle in the first set of obstacles, and
planning (604) a trajectory for the ADV (501) in view of the expanded obstacles in the first set to control the ADV (501) to navigate through the first lane (514), without considering remaining obstacles in the initial set.
**characterised in that** the operations further comprise:
in response to the ADV (501) switching from the first lane (514) to a second lane (512), identifying a second set of obstacles therein based on a second set of predetermined criteria, and
expanding each of the obstacles in the second set of obstacles to a width of the second lane.

9. The system of claim 8, wherein the first set of obstacles include an obstacle closest to the ADV (501) at the beginning of a prediction window, an obstacle closest to the ADV (501) at the end of the prediction window, and one or more obstacles crossing the first lane (514) during the prediction window.

10. The system of claim 8, wherein the ADV stop tracking the first set of obstacles in the first lane after the ADV switches to the second lane.

11. The system of claim 8, wherein each of the first set of obstacles and the second set of obstacles is one of a vehicle, a person, a bicycle, a motorcycle, or another moving object.

12. The system of claim 11, wherein each of the first set of obstacles and the second set of obstacles appears as a polygon to the ADV (501).

13. The system of claim 8, wherein the ADV (501) determines whether to change lane or not based on results of prediction by the ADV (501) based at least on map information.

## Patentansprüche

1. Computerimplementiertes Verfahren zum Betreiben eines autonom fahrenden Fahrzeugs, wobei das Verfahren Folgendes umfasst:
Wahrnehmen (601) einer Fahrumgebung um ein autonom fahrendes Fahrzeug (ADV) (501), einschließlich des Wahrnehmens eines Anfangssatzes von Hindernissen (513, 515, 517, 519) innerhalb einer ersten Fahrspur (514), auf der das ADV (501) fährt;
Identifizieren (602) eines ersten Satzes von einem oder mehreren Hindernissen als eine Teilmenge des Anfangssatzes von Hindernissen (513, 515, 517, 519) basierend auf einem ersten Satz von vorbestimmten Kriterien;
Erweitern (603) einer Dimension eines jeden Hindernisses im ersten Satz von Hindernissen auf eine Breite der ersten Fahrspur (514), um zu verhindern, dass das ADV (501) die Hindernisse des ersten Satzes von Hindernissen vermeidet; und
Planen (604) einer Trajektorie für das ADV (501) angesichts der erweiterten Hindernisse des ersten Satzes, um das ADV (501) zu steuern, durch die erste Fahrspur (514) zu fahren, ohne die restlichen Hindernisse des Anfangssatzes zu berücksichtigen;
**dadurch gekennzeichnet, dass** das Verfahren ferner Folgendes umfasst:
in Reaktion darauf, dass das ADV (501) von der ersten Fahrspur (514) zu einer zweiten Fahrspur (512) wechselt, Identifizieren eines zweiten Satzes von Hindernissen darin basierend auf einem zweiten Satz von vorbestimmten Kriterien; und
Erweitern eines jeden Hindernisses des zweiten Satzes von Hindernissen auf eine Breite der zweiten Fahrspur.

2. Verfahren nach Anspruch 1, wobei der erste Satz von Hindernissen Folgendes umfasst: ein Hindernis, das am Anfang eines Vorhersagefensters dem ADV (501) am nächsten liegt, ein Hindernis, das am Ende des Vorhersagefensters dem ADV (501) am nächsten liegt und ein oder mehrere Hindernisse, die während des Vorhersagefensters die erste Fahrspur (514) schneiden.

3. Verfahren nach Anspruch 1, wobei das ADV (501) das Nachverfolgen des ersten Satzes von Hindernissen auf der ersten Fahrspur (514) stoppt, nachdem das ADV (501) auf die zweite Fahrspur (512) wechselt.

4. Verfahren nach Anspruch 1, wobei ein jedes Hindernis des ersten Satzes von Hindernissen und des zweiten Satzes von Hindernissen eines von Folgenden ist: ein Fahrzeug, eine Person, ein Fahrrad, ein Motorrad oder ein anderes sich bewegendes Objekt.

5. Verfahren nach Anspruch 4, wobei ein jedes Hindernis des ersten Satzes von Hindernissen und des zweiten Satzes von Hindernissen dem ADV als ein Polygon erscheint.

6. Verfahren nach Anspruch 1, wobei das ADV (501) basierend auf Ergebnissen der Vorhersage durch das ADV (501) basierend zumindest auf Karteninformation bestimmt, ob die Fahrspur gewechselt wird oder nicht.

7. Nicht-flüchtiges maschinenlesbares Medium mit darin gespeicherten Anweisungen, die bei Ausführung durch einen Prozessor (1501) den Prozessor (1501) veranlassen, das Verfahren nach einem der Ansprüche 1-6 durchzuführen.

8. Datenverarbeitungssystem, das Folgendes umfasst:
einen Prozessor (1501); und
einen Speicher, der mit dem Prozessor (1501) gekoppelt ist, um Anweisungen zu speichern, die bei Ausführung durch einen Prozessor (1501) den Prozessor (1501) veranlassen, Operationen durchzuführen, wobei die Operationen Folgendes umfassen:
Wahrnehmen (601) einer Fahrumgebung um ein autonom fahrendes Fahrzeug (ADV) (501), einschließlich des Wahrnehmens eines Anfangssatzes von Hindernissen (513, 515, 517, 519) innerhalb einer ersten Fahrspur (514), auf der das ADV (501) fährt;
Identifizieren (602) eines ersten Satzes von einem oder mehreren Hindernissen als eine Teilmenge des Anfangssatzes von Hindernissen (513, 515, 517, 519) basierend auf einem ersten Satz von vorbestimmten Kriterien;
Erweitern (603) einer Dimension eines jeden Hindernisses im ersten Satz von Hindernissen auf eine Breite der ersten Fahrspur (514), um zu verhindern, dass das ADV (501) die Hindernisse des ersten Satzes von Hindernissen vermeidet; und
Planen (604) einer Trajektorie für das ADV (501) angesichts der erweiterten Hindernisse des ersten Satzes, um das ADV (501) zu steuern, durch die erste Fahrspur (514) zu fahren, ohne die restlichen Hindernisse des Anfangssatzes zu berücksichtigen;
**dadurch gekennzeichnet, dass** das Verfahren ferner Folgendes umfasst:
in Reaktion darauf, dass das ADV (501) von der ersten Fahrspur (514) zu einer zweiten Fahrspur (512) wechselt, Identifizieren eines zweiten Satzes von Hindernissen darin basierend auf einem zweiten Satz von vorbestimmten Kriterien; und
Erweitern eines jeden Hindernisses des zweiten Satzes von Hindernissen auf eine Breite der zweiten Fahrspur.

9. Verfahren nach Anspruch 8, wobei der erste Satz von Hindernissen Folgendes umfasst: ein Hindernis, das am Anfang eines Vorhersagefensters dem ADV (501) am nächsten liegt, ein Hindernis, das am Ende des Vorhersagefensters dem ADV (501) am nächsten liegt und ein oder mehrere Hindernisse, die während des Vorhersagefensters die erste Fahrspur (514) schneiden.

10. System nach Anspruch 8, wobei das ADV (501) das Nachverfolgen des ersten Satzes von Hindernissen auf der ersten Fahrspur (514) stoppt, nachdem das ADV (501) auf die zweite Fahrspur (512) wechselt.

11. System nach Anspruch 8, wobei ein jedes Hindernis des ersten Satzes von Hindernissen und des zweiten Satzes von Hindernissen eines von Folgenden ist: ein Fahrzeug, eine Person, ein Fahrrad, ein Motorrad oder ein anderes sich bewegendes Objekt.

12. System nach Anspruch 11, wobei ein jedes Hindernis des ersten Satzes von Hindernissen und des zweiten Satzes von Hindernissen dem ADV als ein Polygon erscheint.

13. System nach Anspruch 8, wobei das ADV (501) basierend auf Ergebnissen der Vorhersage durch das ADV (501) basierend zumindest auf Karteninformation bestimmt, ob die Fahrspur gewechselt wird oder nicht.

## Revendications

1. Procédé, mis en œuvre par ordinateur, d'exploitation d'un véhicule de conduite autonome, dans lequel le procédé comprend les étapes ci-dessous consistant à :
percevoir (601) un environnement de conduite entourant un véhicule de conduite autonome (ADV) (501), et notamment percevoir un ensemble initial d'obstacles (513, 515, 517, 519) dans une première voie de circulation (514) dans laquelle le véhicule ADV (501) circule ;
identifier (602) un premier ensemble d'un ou plusieurs obstacles comme étant un sous-ensemble de l'ensemble initial d'obstacles (513, 515, 517, 519), sur la base d'un premier ensemble de critères prédéterminés ;
élargir (603) une dimension de chaque obstacle du premier ensemble d'obstacles à une largeur de la première voie de circulation (514) en vue d'empêcher le véhicule ADV (501) de notifier tout obstacle du premier ensemble d'obstacles ; et
planifier (604) une trajectoire pour le véhicule ADV (501) compte tenu des obstacles élargis du premier ensemble, afin de commander au véhicule ADV (501) de naviguer dans la première voie de circulation (514), sans tenir compte d'obstacles restants dans l'ensemble initial ;
**caractérisé en ce que** le procédé comprend en outre les étapes ci-dessous consistant à :
en réponse à un changement de voie du véhicule ADV (501), de la première voie de circulation (514) à une seconde voie de circulation (512), identifier un second ensemble d'obstacles dans celle-ci, sur la base d'un second ensemble de critères prédéterminés ; et
élargir chacun des obstacles du second ensemble d'obstacles à une largeur de la seconde voie de circulation.

2. Procédé selon la revendication 1, dans lequel le premier ensemble d'obstacles inclut un obstacle le plus proche du véhicule ADV (501) au début d'une fenêtre de prédiction, un obstacle le plus proche du véhicule ADV (501) à la fin de la fenêtre de prédiction, et un ou plusieurs obstacles traversant la première voie de circulation (514) au cours de la fenêtre de prédiction.

3. Procédé selon la revendication 1, dans lequel le véhicule ADV (501) cesse de suivre le premier ensemble d'obstacles dans la première voie de circulation (514) après le changement de voie du véhicule ADV (501) à la seconde voie de circulation (512).

4. Procédé selon la revendication 1, dans lequel chaque obstacle, parmi le premier ensemble d'obstacles et le second ensemble d'obstacles, correspond à l'un des éléments parmi un véhicule, une personne, une bicyclette, une moto ou un autre objet mobile.

5. Procédé selon la revendication 4, dans lequel chaque obstacle, parmi le premier ensemble d'obstacles et le second ensemble d'obstacles, apparaît sous la forme d'un polygone pour le véhicule ADV.

6. Procédé selon la revendication 1, dans lequel le véhicule ADV (501) détermine s'il convient de changer de voie de circulation ou non sur la base des résultats d'une prédiction, effectuée par le véhicule ADV (501), basée au moins sur des informations de carte.

7. Support non transitoire lisible par machine sur lequel sont stockées des instructions qui, lorsqu'elles sont exécutées par un processeur (1501), amènent le processeur (1501) à mettre en œuvre le procédé selon l'une quelconque des revendications 1 à 6.

8. Système de traitement de données, comprenant :
un processeur (1501) ; et
une mémoire, couplée au processeur (1501), pour stocker des instructions qui, lorsqu'elles sont exécutées par un processeur (1501), amènent le processeur (1501) à mettre en œuvre des opérations, les opérations comprenant les étapes ci-dessous consistant à :
percevoir (601) un environnement de conduite entourant un véhicule de conduite autonome (ADV) (501), et notamment percevoir un ensemble initial d'obstacles (513, 515, 517, 519) dans une première voie de circulation (514) dans laquelle le véhicule ADV (501) circule ;
identifier (602) un premier ensemble d'un ou plusieurs obstacles comme étant un sous-ensemble de l'ensemble initial d'obstacles (513, 515, 517, 519), sur la base d'un premier ensemble de critères prédéterminés ;
élargir (603) une dimension de chaque obstacle du premier ensemble d'obstacles à une largeur de la première voie de circulation (514) en vue d'empêcher le véhicule ADV (501) de notifier tout obstacle du premier ensemble d'obstacles ; et
planifier (604) une trajectoire pour le véhicule ADV (501) compte tenu des obstacles élargis du premier ensemble, pour commander au véhicule ADV (501) de naviguer dans la première voie de circulation (514), sans tenir compte d'obstacles restants dans l'ensemble initial ;
**caractérisé en ce que** les opérations comprennent en outre les étapes ci-dessous consistant à :
en réponse à un changement de voie du véhicule ADV (501), de la première voie de circulation (514) à une seconde voie de circulation (512),
identifier un second ensemble d'obstacles dans celle-ci, sur la base d'un second ensemble de critères prédéterminés ; et
élargir chacun des obstacles du second ensemble d'obstacles à une largeur de la seconde voie de circulation.

9. Système selon la revendication 8, dans lequel le premier ensemble d'obstacles inclut un obstacle le plus proche du véhicule ADV (501) au début d'une fenêtre de prédiction, un obstacle le plus proche du véhicule ADV (501) à la fin de la fenêtre de prédiction, et un ou plusieurs obstacles traversant la première voie de circulation (514) au cours de la fenêtre de prédiction.

10. Système selon la revendication 8, dans lequel le véhicule ADV cesse de suivre le premier ensemble d'obstacles dans la première voie de circulation après le changement de voie du véhicule ADV à la seconde voie de circulation.

11. Système selon la revendication 8, dans lequel chaque obstacle, parmi le premier ensemble d'obstacles et le second ensemble d'obstacles, correspond à l'un des éléments parmi un véhicule, une personne, une bicyclette, une moto ou un autre objet mobile.

12. Système selon la revendication 11, dans lequel chaque obstacle, parmi le premier ensemble d'obstacles et le second ensemble d'obstacles, apparaît sous la forme d'un polygone pour le véhicule ADV (501).

13. Système selon la revendication 8, dans lequel le véhicule ADV (501) détermine s'il convient de changer de voie de circulation ou non sur la base des résultats d'une prédiction, effectuée par le véhicule ADV (501), basée au moins sur des informations de carte.
